# EUROPEAN PATENT APPLICATION

(11) **EP 2 365 362 A1**
(43) Date of publication of application: **14.09.2011**
(21) Application number: 11168531.9
(22) Date of filing: 20.10.2009
(51) Int. Cl.: G02B 6/122, G02B 6/132, G02B 6/13, B29C 43/00, B29D 11/00

(54) **Fabricating optical waveguides**

(30) Priority: 21.10.2008 US 255536
(62) Divisional of application: 09741155.7
(71) Applicant: Qualcomm Mems Technologies, Inc., San Diego, CA 92121 (US)
(72) Inventor: Chui, Clarence, Santa Clara, CA 95054 (US)
(74) Representative: Witte, Weller & Partner

(57) **Abstract**

Methods and devices are provided for fabricating waveguides. Some such methods comprise pressing outlines of waveguide features into a first layer; sputtering a second layer on the first layer, the second layer having a higher index of refraction than the layer the second layer is sputtered on; and forming a third layer on the second layer, the third layer having a lower index of refraction than the second layer. Further, a corresponding system for forming waveguides is disclosed, the system comprising: means for pressing outlines of waveguide features into a first layer; means for sputtering a second layer on the first layer, the second layer having a higher index of refraction than the layer the second layer is sputtered on; and means for forming a third layer on the second layer, the third layer having a lower index of refraction than the second layer.

## Description

This application claims priority to U.S. Patent Application No. 12/255,536 (Attorney Docket No. QUALP006/081118), filed on October 21, 2008 and entitled "Fabricating Optical Waveguides," which is hereby incorporated by reference and for all purposes.

### FIELD OF THE INVENTION

This application relates generally to optical waveguides and in particular to the fabrication of optical waveguides.

### BACKGROUND OF THE INVENTION

An optical waveguide is a structure that guides electromagnetic waves. Common types of optical waveguides include optical fiber and rectangular waveguides. Optical waveguides can be classified in various ways, e.g., according to geometry (e.g., planar, strip, or fiber waveguides), mode structure (single-mode, multi-mode), refractive index distribution (step or gradient index) or material (e.g., glass, polymer, semiconductor).

Optical waveguides may be used as components in various types of devices, including integrated optical circuits, optical communication systems, laser diodes, interferometers, wavelength division multiplexers and display devices. Although existing methods of fabricating optical waveguides are generally satisfactory, it would be desirable to produce optical waveguides using lower-cost processes.

### SUMMARY

Improved methods and devices are provided for fabricating waveguides. Some such methods involve forming at least a portion of the waveguide using an embossing process for shaping a substrate and/or other components. Some implementations provide processes for making waveguide features by omitting what may previously have been regarded as essential steps in forming waveguides via a semiconductor fabrication process. Moreover, some implementations provide processes of forming waveguide features by deliberately causing what would heretofore have been regarded as defects in a semiconductor fabrication process. Some such methods and devices can produce waveguides at a substantially lower cost than was heretofore possible.

Some implementations provide a method of forming a waveguide that includes the following steps: pressing outlines of waveguide features into a first layer; affixing the first layer to a second layer having a lower index of refraction than the first layer; and cladding the waveguide features with a third layer having a lower index of refraction than the first layer. Some embodiments provide a waveguide formed according to such a method.

The pressing process may involve embossing and/or stamping. The pressing, affixing and/or cladding may be performed as part of a roll-to-roll process.

The affixing process may involve affixing one layer to another layer (e.g., affixing the first layer to the second layer) with a pressure-sensitive adhesive. In some such implementations, the pressure-sensitive adhesive may have an index of refraction lower than that of the first layer.

The method may involve a process of removing at least some of the first layer prior to the cladding. For example, the removing process may involve a plasma ashing process and/or a solvent treatment. The waveguide features may or may not be protected during the removing process, depending on the implementation.

Alternative methods of forming a waveguide include the following steps: pressing outlines of waveguide features into a first layer; forming a second layer on the first layer; sputtering a discontinuous third layer on the second layer, the third layer having a higher index of refraction than the second layer; and forming a fourth layer on the third layer. The fourth layer may have a lower index of refraction than the third layer. Some embodiments provide a waveguide formed according to such a method.

According to some implementations, the forming process may involve sputtering. Alternatively, or additionally, the forming process may involve spin coating, chemical vapor deposition and/or atomic layer deposition. The pressing process may entail embossing and/or stamping. The pressing, forming and/or sputtering may be performed as part of a roll-to-roll process.

The method may further involve a process of removing at least some of the second layer and/or the third layer prior to forming the fourth layer. The removing process may comprise a plasma ashing process and/or a solvent treatment. The waveguide features may or may not be protected during the removing process.

Yet other methods of forming a waveguide are provided herein. Some such methods include the following steps: pressing outlines of waveguide features into a first layer; sputtering a second layer on the first layer, the second layer having a higher index of refraction than the first layer; and forming a third layer on the second layer. The third layer may have a lower index of refraction than the second layer. In some implementations, the forming process may comprise sputtering. Some embodiments provide a waveguide formed according to such a method.

The method may also involve a process of removing at least some of the second layer prior to forming the third layer. The method removing process may comprise a plasma ashing and/or a solvent treatment process. The waveguide features may or may not be protected during the removing process.

Systems for fabricating waveguides are also provided herein. One such system includes the following elements: an embossing apparatus configured for pressing outlines of waveguide features into a first layer; a first depositional apparatus configured to form a second layer on the first layer; a sputtering apparatus configured to sputter a third layer on the second layer, the third layer having a higher index of refraction than the second layer; and a second depositional apparatus configured to form a fourth layer on the third layer, the fourth layer having a lower index of refraction than the third layer.

The first depositional apparatus may be configured to sputter the second layer on the first layer. Alternatively, or additionally, the first depositional apparatus may be configured to form the second layer on the first layer spin coating, chemical vapor deposition and/or atomic layer deposition.

An alternative system for forming waveguides includes the following elements: apparatus for pressing outlines of waveguide features into a first layer; apparatus for sputtering a second layer on the first layer, the second layer having a higher index of refraction than the first layer; and apparatus for forming a third layer on the second layer. The third layer may have a lower index of refraction than the second layer.

The forming apparatus may, for example, comprise a sputtering device. The system may also include apparatus for removing at least some of the second layer prior to forming the third layer.

These and other methods of the invention may be implemented by various types of hardware, software, firmware, etc. For example, some features of the invention may be implemented, at least in part, by computer programs embodied in machine-readable media. The computer programs may include instructions for controlling one or more devices (e.g., devices used for fabricating waveguides) to perform the methods described herein.

### BRIEF DESCRIPTION OF THE DRAWINGS

FIG. 1A is a flow chart that outlines some methods of fabricating optical waveguides.

FIG. 1B is a schematic depiction of one example of an embossing step in a roll-to-roll process for fabricating optical waveguides according to some implementations described herein.

FIGS. 2A through 2D provide examples of various steps in the fabrication of optical waveguides according to some implementations described herein, e.g., with reference to FIG 1A.

FIGS. 2E and 2F provide examples of various steps in the fabrication of optical waveguides according to some alternative implementations described herein, e.g., with reference to FIG 1A.

FIG. 3 is a flow chart that outlines some alternative methods of fabricating optical waveguides.

FIG. 4 illustrates one step in the fabrication of optical waveguides according to some implementations described herein, e.g., with reference to FIG 3.

FIG. 5 is a schematic depiction of an example of a "roll-to-roll" process for fabricating optical waveguides according to some implementations described herein.

### DETAILED DESCRIPTION

While the present invention will be described with reference to a few specific embodiments, the description is merely illustrative of the invention and is not to be construed as limiting the invention. Various modifications to the present invention can be made to the preferred embodiments without departing from the true spirit and scope of the invention as defined by the appended claims. For example, the steps of methods shown and described herein are not necessarily performed in the order indicated. It should also be understood that the methods of the invention may include more or fewer steps than are indicated. In some implementations, steps described herein as separate steps may be combined. Conversely, what may be described herein as a single step may be implemented in multiple steps.

Similarly, device functionality may be apportioned by grouping or dividing tasks in any convenient fashion. For example, when steps are described herein as being performed by a single device (e.g., by a single embossing device), the steps may alternatively be performed by multiple devices and vice versa.

The terms "low index," "high index" and the like are often used herein. These terms are generally intended to mean a relatively high or low index of refraction, as compared to that of other materials described herein. For example, the waveguides described herein will generally include a "high index" material having a relatively higher index of refraction disposed between "low index" materials having a relatively lower index of refraction. Such terms do not necessarily mean, for example, that the "high index" material has an index of refraction that is above a predetermined threshold level.

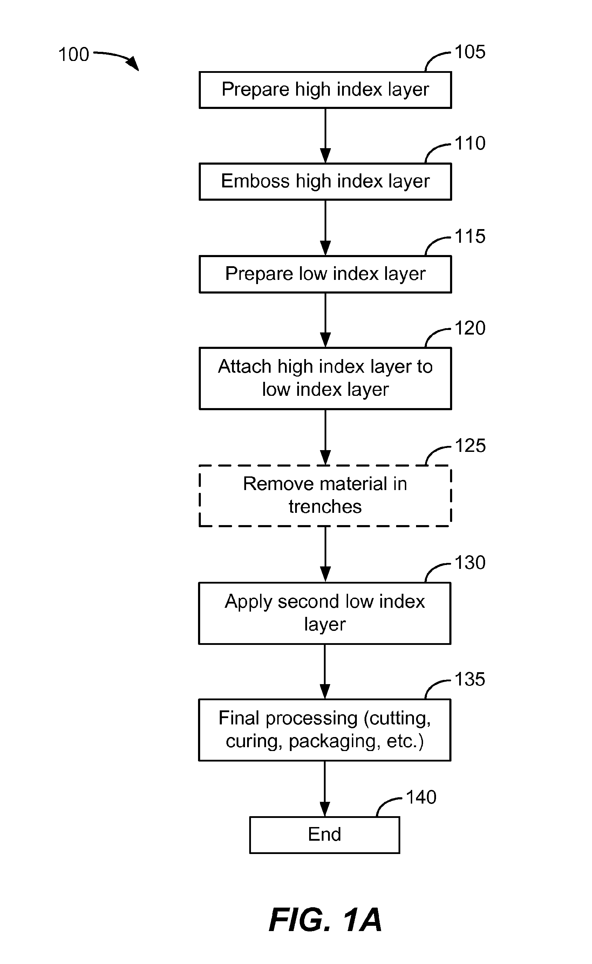

Some methods of fabricating waveguides will now be described with reference to method 100 of FIG. 1A. In step 105, a high index layer will be prepared for embossing. The high index material may comprise, for example, polycarbonate, polystyrene, polyethylene terephthalate ("PET"), polyimide, or photoresist material.

The preparation step may depend, at least to some extent, on the implementation. The preparation step may involve, e.g., positioning a section of high index material under a stamp or between opposing stamps, feeding a sheet of high index material into an embossing device, etc. In other implementations, step 105 may involve cutting or otherwise shaping a high index material and placing it in a position to be embossed. Step 105 or step 110 may, in some implementations, involve heating the high index layer.

In step 110, the high index layer is embossed. Step 110 will involve applying pressure to the high index layer and may involve a combination of heat and pressure. A traditionally embossing process will generally involve pressing material between a patterned "male" die (or the like) and an opposing "female" die. However, the term "embossing" will be used herein to include similar processes, e.g., processes that might be considered "stamping." In some such processes, material is pressed between a patterned surface and an unpatterned surface.

In some implementations, steps 105 and 110 involve feeding a sheet of high index material into a pair of patterned rollers or under a single patterned roller. Such implementations may be advantageous for a "roll-to-roll" manufacturing process.

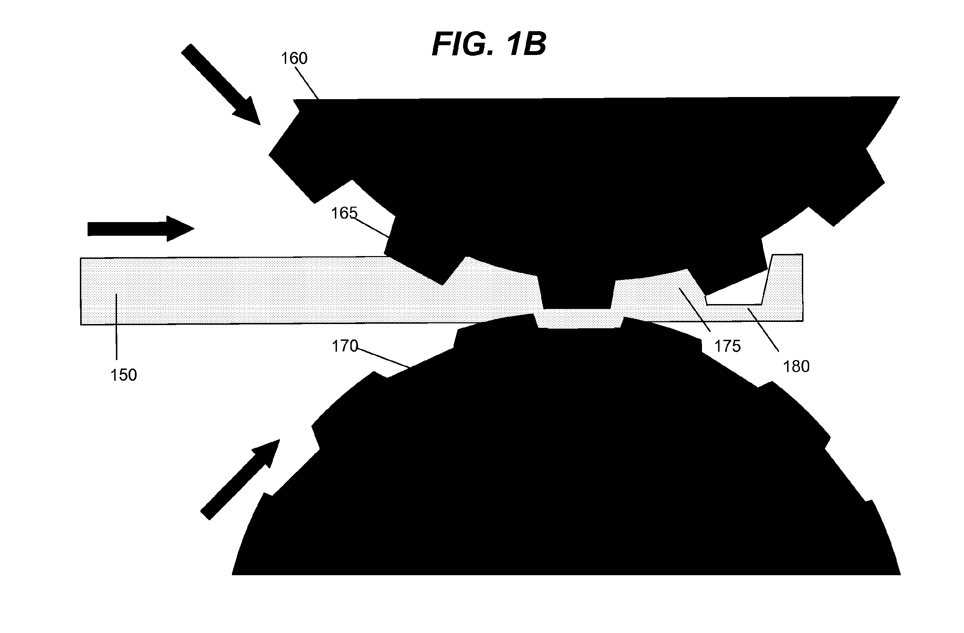

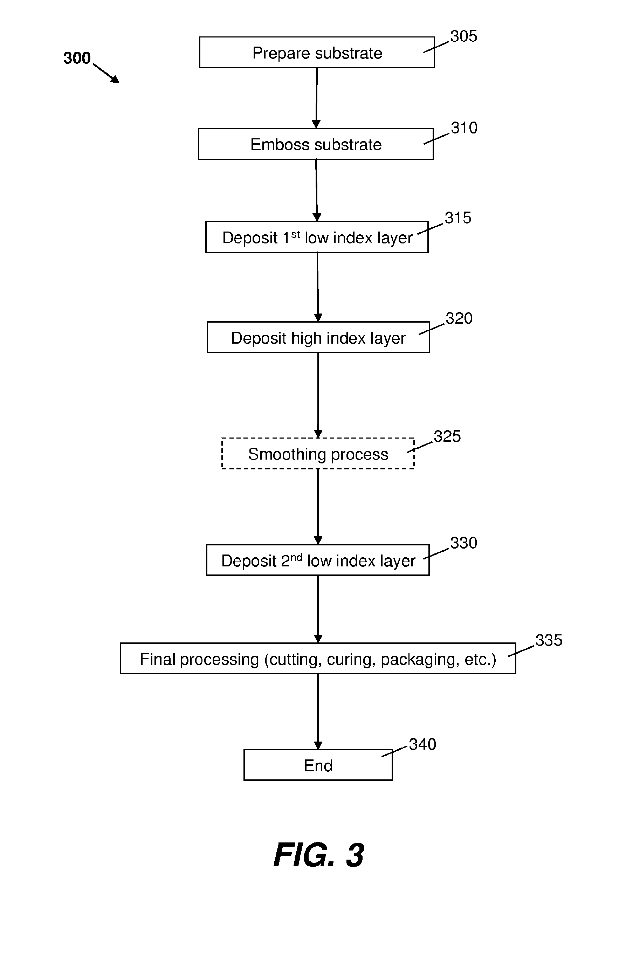

One such example is depicted in FIG. 1B. Here, layer 150 is being fed between, and embossed by, rollers155 and 160. Rollers 155 and 160 may be fashioned from any suitable material, preferably a relatively durable material such as metal. In some implementations, for example, rollers 155 and 160 may be made of brass. In the example of method 100, layer 150 may be a high index layer. In alternative implementations (e.g., those of method 300, described below with reference to FIG. 3), layer 150 may be a substrate, such as a low index substrate. During the embossing process, layer 150 is compressed between male sections 165 and opposing female sections 170 to produce structures 175 and trenches 180.

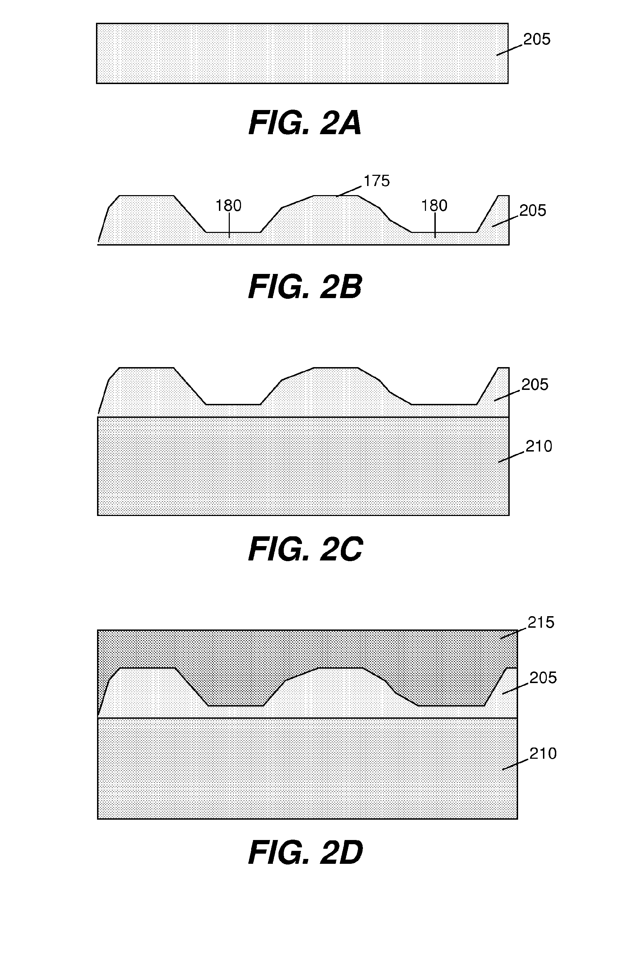

Figs. 2A and 2B provide another example of a material (here, high index material 205) before and after an embossing step. Prior to the embossing step, as of the time depicted in FIG. 2A, high index material 205 has a relatively uniform thickness. After the embossing step (e.g., step 110), high index material 205 includes structures 175 and trenches 180. The height, width, shape, spacing, etc., of structures 175 and trenches 180 are provided only by way of example. In some implementations, for example, the width and/or thickness of structures 175 may be on the order of millimeters, hundreds of microns, tens of microns, microns, etc.

In step 115, a low index layer is prepared. This step may depend, at least to some extent, on the implementation and/or the type of material used for the low index layer. The low index layer may, for example, comprise glass, plastic, a polymer (e.g., such as polycarbonate), poly(methyl methacrylate) ("PMMA"), etc.

Step 115 may involve, e.g., positioning a section of low index material adjacent to a corresponding section of high index material. Step 115 may also involve applying an adhesive material to the low index layer and/or to the high index layer. For example, step 115 may involve applying a pressure-sensitive adhesive material (e.g., a low index pressure-sensitive adhesive material) to the low index layer. In a roll-to-roll manufacturing process, step 115 may involve, e.g., aligning the low index layer with the high index layer for further roll-to-roll processing. In other implementations, step 115 5 may involve cutting a portion of a sheet of low index material and placing it in a position to be affixed to the high index layer.

In step 120, the high index layer is attached to the low index layer. Step 120 may, for example, involve pressing the low index layer together with the high index layer using rollers, a press, a stamp, etc. In alternative implementations, the high index layer is attached to a substrate with arbitrary optical properties via a low index pressure sensitive adhesive. According to such implementations, the substrate may or may not be formed of a low index material. In a roll-to-roll manufacturing process, step 120 may involve, e.g., feeding a sheet of low index material and a sheet of high index material into a pair of rollers or under a single roller, etc. Step 115 and/or step 120 may, in some implementations, involve heating the low index layer and/or the high index layer.

One example of an embossed high index layer 205 affixed to a low index layer 210 is provided in FIG. 2C. As such, FIG. 2C provides one example of a result of step 120 of FIG. 1A. As with other illustrations provided herein, the relative dimensions of high index layer 205 and low index layer 210 are not necessarily to scale and are merely made by way of illustration.

Trenches 180 and/or structures 175 may or may not be partially removed (optional step 125) before a second layer of low index material is applied (step 130). In some waveguide fabrication processes of the invention, a second layer of low index material is applied without removing material from trenches 180 or structures 175. For example, a second layer of low index material such as a polymer, plastic, etc., may be applied by sputtering, spin coating, spraying, or any other convenient process.

FIG. 2D provides an example of a result of one such process. Here, the structures 175 and trenches 180 of high index layer 205 have been clad in second low index material 215. In this example, low index material 215 comprises a low index polymer. However, the type and thickness of low index material 215 may vary according to the implementation.

For some applications, however, it may be desirable to more completely de-couple structures 175 from one another. Removing some or all of trenches 180, for example, may reduce "leakage" of light between adjacent high index areas 175. Therefore, in alternative implementations, some or all of trenches 180 will be removed. Step 125 may involve, e.g., a solvent treatment, a plasma ashing process, etc. In one example of a plasma ashing process, a monatomic reactive species (e.g., of oxygen or fluorine) is generated using a plasma source. The reactive species combines with the high index layer to form ash, which may be removed with a vacuum pump or the like.

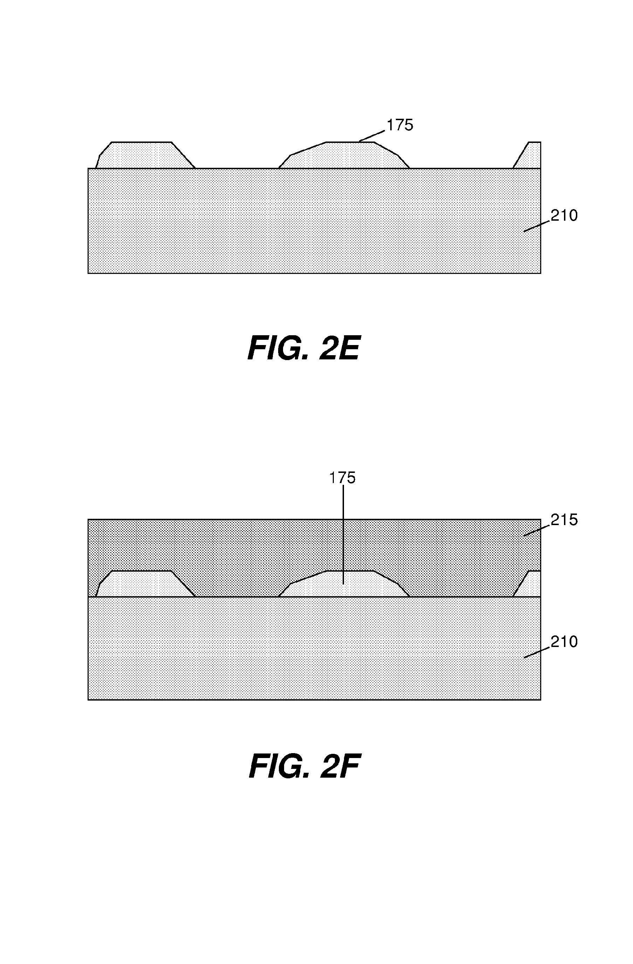

FIG. 2E provides an example of a result of one such process. Here, the trenches 180 of high index layer 205 have been removed, leaving structures 175. At the subsequent time depicted in FIG. 2F, step 130 has been performed. Structures 175 and portions of low index layer 210 have been clad in second low index material 215.

Before process 100 ends, one or more final processing steps may be performed. For example, the structure may be heated, dried or otherwise cured. The waveguide may be cut or diced into smaller portions, packaged, etc.

It will now be appreciated that some implementations described herein omit what would previously have been considered essential steps of forming optical waveguides via a semiconductor fabrication process. In contrast to fabricating waveguides via a conventional lithographic process, waveguides may be fabricated according to many implementations provided herein without preparing and applying a photomask or using a similar patterning process. When fabricating waveguides according to method 100 or the like, there is no need to coat a substrate with a photoresist, position the photomask, expose the photomask with light, etc. Similarly, there is no need to remove the unexposed regions of the substrate. Accordingly, the methods described herein can allow optical waveguides to be made at a substantially lower cost as compared to those made via prior art methods.

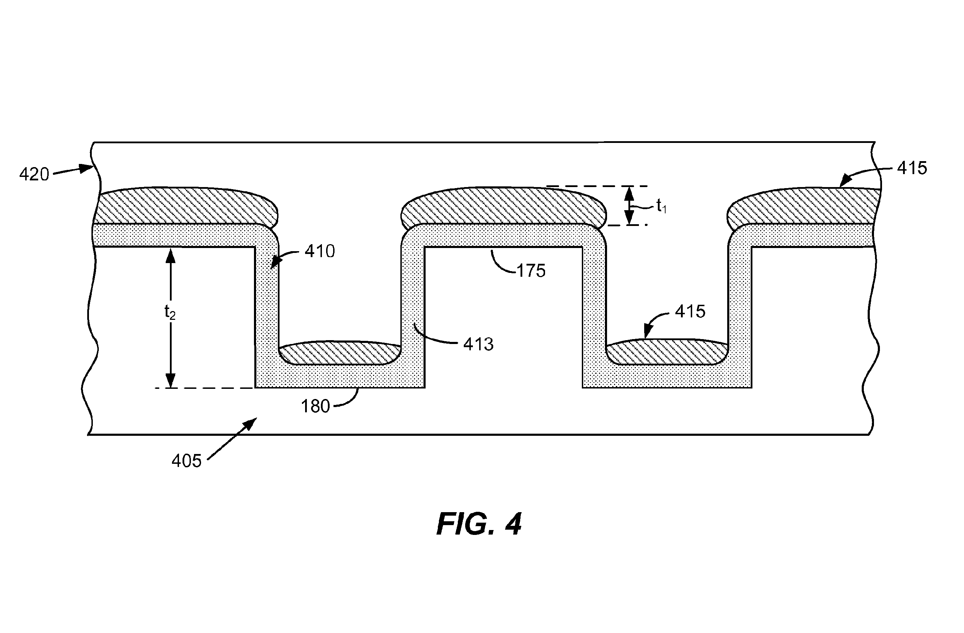

Some alternative implementations will now be described with reference to FIG. 3 and FIG. 4. Referring first to FIG. 3, some steps of method 300 will now be described. Like method 100, method 300 also provide processes for making optical waveguides by omitting what would previously have been regarded as essential steps in forming waveguides via a semiconductor fabrication process (e.g., photomasking, the use of photoresist, the removal of unexposed parts of a substrate, etc.). Moreover, some implementations of method 300 involve processes for making optical waveguides by deliberately causing what would heretofore have been regarded as a defect in a semiconductor fabrication process.

In step 305, a substrate is prepared for embossing. In some implementations, the substrate may be formed of a low index material such as plastic, a polymer (e.g., such as polycarbonate), etc. However, in alternative implementations, the substrate may not comprise a low index material. The preparation step may depend on the implementation. For a "roll-to-roll" manufacturing process, the preparation step may involve, e.g., positioning a section of the substrate under a stamp or between opposing stamps, positioning the substrate for feeding into a roller, etc. In other implementations, step 305 may involve cutting a portion of a sheet of the substrate and placing it in a position to be embossed. Step 305 or step 310 may, in some implementations, involve heating the substrate.

In step 310, the substrate is embossed. Step 310 may involve pressing the substrate between a patterned "male" die and an opposing "female" die, pressing the substrate between a patterned surface and an unpatterned surface, feeding a sheet of the substrate into a pair of patterned rollers or under a single patterned roller, etc.

In some implementations, as here, a first low index layer is deposited on the substrate. (Step 315.) The low index layer may be made of any appropriate material and deposited in any convenient fashion. In some implementations, as depicted in FIG. 4, low index layer 410 is deposited on substrate 405 as a relatively conformal layer. For example, the low index layer may be deposited via chemical vapor deposition ("CVD"), atomic layer deposition ("ALD"), spin coating, spraying, etc.

In this example, high index layer 415 is sputtered onto relatively conformal low index layer 410. Sputter deposition of high index layer 415 will tend to cause most of high index layer 415 to form on structures 175 and trenches 180, but little deposition on walls 413. Although such uneven deposition would normally be considered a problem, sputter deposition of high index layer 415 will allow high index material to selectively accumulate on structures 175 and trenches 180, thereby isolating the high index portions of a waveguide. Accordingly, such implementations involve processes for making optical waveguides by deliberately causing what would heretofore have been regarded as a defect in a semiconductor fabrication process.

The elements in FIG. 4 are not drawn to scale. In some preferred implementations, the thickness t₁ of high index layer 415 will be substantially greater than the height t₂ of structures 175 relative to trenches 180. For example, in some implementations t₂ will be at least five times greater than t₁, in other implementations t₂ will be at least ten times greater than t₁, whereas in yet other implementations t₂ will be at least 20 times greater than t₁.

It is not essential that low index layer 410 be applied in a conformal layer. Therefore, in alternative implementations, both high index layer 415 and low index layer 410 may be deposited via sputtering or another less conformal process.

In yet other implementations, wherein the substrate is formed of a low index material, step 315 may be omitted. For example, high index layer 415 may be sputtered directly onto a low index substrate 405. Such implementations can further simplify the manufacturing process.

Sputtering may cause irregular edges, globs or other undesirable features, e.g., in high index layer 415. Therefore, in optional step 325, some type of smoothing process is implemented. For example, step 325 may involve a post-deposition etching process, a solvent wash, etc.

In the present example, a second low index layer 420 is deposited in step 330. Here, second low index layer 420 may be applied by spraying, spin coating, ALD, CVD or any other convenient fashion. For implementations wherein high index layer 415 is sputtered directly onto a low index substrate 405, low index layer 420 may actually be the first and only low index layer that is deposited.

In step 335, the final processing takes place. Step 335 may involve one or more procedures such as heating, drying or otherwise curing the waveguide. The waveguide may be cut or diced into smaller portions, packaged, etc. The process ends in step 340.

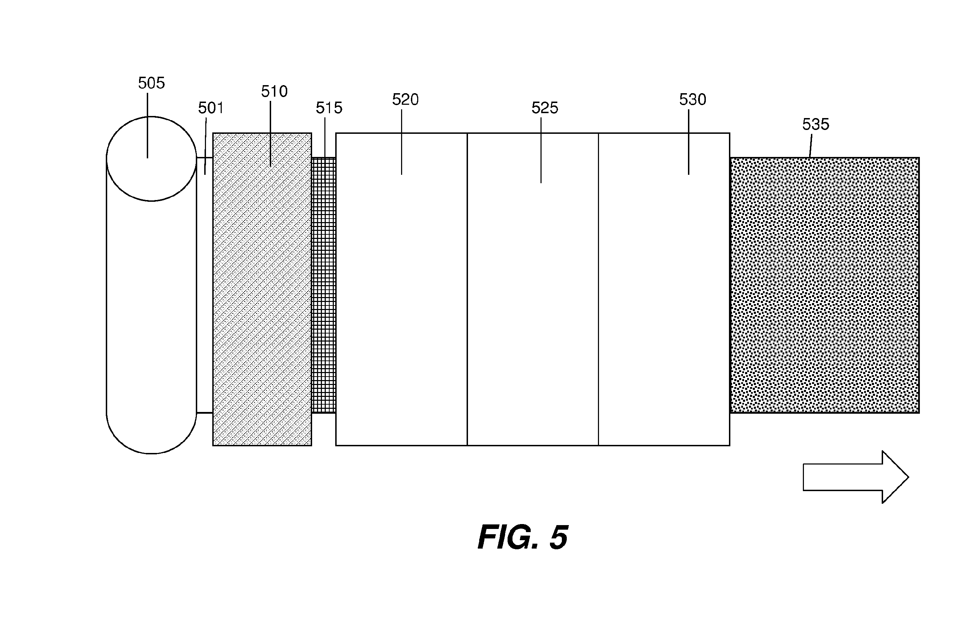

FIG. 5 is a schematic diagram that depicts apparatus that may be used to implement some roll-to-roll optical waveguide manufacturing processes of the invention. The following example will explain how such devices may be used to implement some processes described above with reference to FIG. 3.

In this example, substrate 501 is a sheet of polymer, plastic or the like. Substrate 501 is unrolled from roll 505 and fed into embossing apparatus 510. (See steps 305 and 310 of FIG. 3.) Embossing apparatus 510 may be any convenient type of embossing apparatus, e.g., a roller-type embossing apparatus as described above. Embossing apparatus 510 may also include a heating device configured to impart heat to substrate 501, e.g., before and/or during the embossing process. In some implementations, surfaces of the embossing apparatus (e.g., surfaces of a stamp, roller, etc.) may be heated, e.g., via embedded electrical resistors, by circulating hot fluid in the embossing apparatus, etc. The embossed surface 515 of substrate 501 is shown after leaving embossing apparatus 510.

Apparatus 520 is configured to deposit a first low index layer on embossed surface 515 of substrate 501. (See step 315 of FIG. 3.) In some implementations, apparatus 520 may comprise a chamber configured for a CVD process, for an ALD process, for spraying on a thin film of low index material, etc. In alternative implementations, apparatus 520 may comprise a chamber configured for sputter deposition of a low index material.

Apparatus 525 is configured to deposit a high index layer on at least part of the low index layer. (See step 320 of FIG. 3.) In some preferred implementations, apparatus 520 may comprise a chamber configured for sputter deposition of the high index material. As noted elsewhere herein, a sputter deposition process will tend to deposit substantially more material in trenches and raised structures than on vertical or near-vertical sides of structures. Therefore, sputter deposition of the high index material has the advantageous effect of tending to isolate deposits of high index material that will be used for transmitting light in an optical waveguide. However, in alternative implementations, apparatus 520 may comprise a chamber configured for spraying on a thin film of high index material or configured for some other depositional process.

Apparatus 530 is configured to deposit a second low index layer on the high index material and other surfaces, e.g., on surfaces of the first layer of low index material upon which no high index material was deposited. (See step 330 of FIG. 3.) Depending on the implementation, apparatus 530 may comprise a chamber configured for a CVD process, for an ALD process, for spraying on a thin film of low index material, for sputter deposition of a low index material, etc. The resulting waveguide material 535 may be cured, cut, packaged, etc., according to the desired implementation. (See step 335 of FIG. 3.) Although not shown in FIG. 5, there may be an apparatus disposed between apparatus 525 and 530 that is configured to perform a smoothing process, e.g., a process as described above with reference to step 325 of FIG. 3.

The present application discloses in particular the aspects defined in the following clauses which form part of the present description, but are not claims, in accordance with decision J 15/88 of the Legal Board of Appeal of the European Patent Office.
(1) Method of forming a waveguide, comprising: pressing outlines of waveguide features into a first layer; affixing the first layer to a second layer having a lower index of refraction than the first layer; and cladding the waveguide features with a third layer having a lower index of refraction than the first layer.
(2) Method of clause (1), wherein the pressing comprises embossing.
(3) Method of clause (1) or clause (2), wherein the pressing comprises stamping.
(4) Method of any of clauses (1) through (3), wherein at least one of the pressing, affixing or cladding is performed as part of a roll-to-roll process.
(5) Method of any of clauses (1) through (4), wherein the affixing comprises affixing the first layer to the second layer with a pressure-sensitive adhesive.
(6) Method of any of clauses (1) through (5), further comprising a process of removing at least some of the first layer prior to the cladding.
(7) Waveguide formed according to the method of any of clauses (1) through (6).
(8) Method of clause (5), wherein the pressure-sensitive adhesive has an index of refraction lower than that of the first layer.
(9) Method of clause (6), wherein the removing process comprises at least one of a plasma ashing process or a solvent treatment.
(10) Method of clause (6), wherein the waveguide features are not protected during the removing process.
(11) Method of forming a waveguide, comprising: pressing outlines of waveguide features into a first layer; forming a second layer on the first layer; sputtering a discontinuous third layer on the second layer, the third layer having a higher index of refraction than the second layer; and forming a fourth layer on the third layer, the fourth layer having a lower index of refraction than the third layer.
(12) Method of clause (11), wherein the forming comprises sputtering.
(13) Method of clause (11) or clause (12), wherein the forming comprises at least one of spin coating, chemical vapor deposition or atomic layer deposition.
(14) Method of any of clauses (11) through (13), wherein the pressing comprises embossing or stamping.
(15) Method of any of clauses (11) through (14), wherein at least one of the pressing, forming or sputtering is performed as part of a roll-to-roll process.
(16) Method of any of clauses (11) through (15), further comprising a process of removing at least some of the second layer or the third layer prior to forming the fourth layer.
(17) Waveguide formed according to the method of any of clauses (11) through (16).
(18) Method of clause (16), wherein the removing process comprises at least one of a plasma ashing process or a solvent treatment.
(19) Method of clause (16), wherein the waveguide features are not protected during the removing process.
(20) Method of forming a waveguide, comprising: pressing outlines of waveguide features into a first layer; sputtering a second layer on the first layer, the second layer having a higher index of refraction than the first layer; and forming a third layer on the second layer, the third layer having a lower index of refraction than the second layer.
(21) Method of clause (20), wherein the forming comprises sputtering.
(22) Method of clause (20) or clause (21), further comprising a process of removing at least some of the second layer prior to forming the third layer.
(23) Waveguide formed according to the method of any of clauses (20) through (22).
(24) Method of clause (22), wherein the removing process comprises plasma ashing or a solvent treatment.
(25) Method of clause (22), wherein the waveguide features are not protected during the removing process.
(26) System for fabricating waveguides, comprising: an embossing apparatus configured for pressing outlines of waveguide features into a first layer; a first depositional apparatus configured to form a second layer on the first layer; a sputtering apparatus configured to sputter a third layer on the second layer, the third layer having a higher index of refraction than the second layer; and a second depositional apparatus configured to form a fourth layer on the third layer, the fourth layer having a lower index of refraction than the third layer.
(27) The system of clause (26), wherein the first depositional apparatus is configured to sputter the second layer on the first layer.
(28) The system of clause (26) or clause (27), wherein the first depositional apparatus is configured to form the second layer on the first layer by at least one of spin coating, chemical vapor deposition or atomic layer deposition.
(29) System for forming waveguides, comprising: means for pressing outlines of waveguide features into a first layer; means for sputtering a second layer on the first layer, the second layer having a higher index of refraction than the first layer; and means for forming a third layer on the second layer, the third layer having a lower index of refraction than the second layer.
(30) The system of clause (29), wherein the means for forming comprises a sputtering device.
(31) The system of clause (29) or clause (30), further comprising means for removing at least some of the second layer prior to forming the third layer.

Although illustrative embodiments and applications of this invention are shown and described herein, many variations and modifications are possible which remain within the concept, scope, and spirit of the invention, and these variations should become clear after perusal of this application. Accordingly, the present embodiments are to be considered as illustrative and not restrictive, and the invention is not to be limited to the details given herein, but may be modified within the scope and equivalents of the appended claims.

## Claims

1. Method of forming a waveguide, comprising:
pressing outlines of waveguide features into a first layer;
sputtering a second layer on the first layer, the second layer having a higher index of refraction than the layer the second layer is sputtered on; and
forming a third layer on the second layer, the third layer having a lower index of refraction than the second layer.

2. Method of claim 1, wherein the forming comprises sputtering.

3. Method of claim 1 or claim 2, further comprising a process of removing at least some of the second layer prior to forming the third layer.

4. Method of claim 1, further comprising:
after the step of pressing outlines of waveguide features into a first layer, forming a low index layer on the first layer;
sputtering the second layer on the low index layer instead of the first layer,
wherein the second layer is a discontinuous layer.

5. Method of claim 4, wherein the forming the low index layer comprises at least one of spin coating, chemical vapor deposition or atomic layer deposition.

6. Method of claim 4 or 5, wherein the pressing comprises embossing or stamping.

7. Method of any of claims 4 through 6, wherein at least one of the pressing, forming or sputtering is performed as part of a roll-to-roll process.

8. Method of any of claims 4 through 7, further comprising a process of removing at least some of the second layer or the third layer prior to forming the fourth layer.

9. Waveguide formed according to the method of any of claims 1 through 8.

10. System for forming waveguides, comprising:
means for pressing outlines of waveguide features into a first layer;
means for sputtering a second layer on the first layer, the second layer having a higher index of refraction than the layer the second layer is sputtered on; and
means for forming a third layer on the second layer, the third layer having a lower index of refraction than the second layer.

11. System of claim 10, wherein the means for forming comprises a sputtering device.

12. System of claim 10 or claim 11, further comprising means for removing at least some of the second layer prior to forming the third layer.

13. System of claim 10, further comprising:
a first depositional apparatus configured to form a low index layer on the first layer,
wherein the means for sputtering are embodied as means for sputtering the second layer on the low index layer instead of the first layer.

14. System of claim 13, wherein the first depositional apparatus is configured to sputter the low index layer on the first layer.

15. System of claim 13 or claim 14, wherein the first depositional apparatus is configured to form the low index layer on the first layer by at least one of spin coating, chemical vapor deposition or atomic layer deposition.
